# EUROPÄISCHE PATENTSCHRIFT

(11) **EP 3 964 724 B1**
(45) Veröffentlichungstag und Bekanntmachung des Hinweises auf die Patenterteilung: **04.10.2023**
(21) Anmeldenummer: 21193248.8
(22) Anmeldetag: 26.08.2021
(51) Int. Cl.: F16C 33/36, B24B 1/00

(54) **ROLLE FÜR ROLLENLAGER, ANORDNUNG MIT EINEM SCHLEIFWERKZEUG UND EINER ROLLE FÜR EIN ROLLENLAGER SOWIE VERFAHREN ZUM HERSTELLEN EINER ROLLE FÜR EIN ROLLENLAGER**
ROLLER FOR ROLLER BEARING, ARRANGEMENT COMPRISING A GRINDING TOOL AND A ROLLER FOR A ROLLER BEARING AND METHOD FOR MANUFACTURING A ROLLER FOR A ROLLER BEARING
ROULEAU POUR PALIER À ROULEAUX, AGENCEMENT DOTÉ D'UN OUTIL DE PONÇAGE ET D'UN ROULEAU POUR UN PALIER À ROULEAUX, AINSI QUE PROCÉDÉ DE FABRICATION D'UN ROULEAU POUR UN PALIER À ROULEAUX

(30) Priorität: 02.09.2020 DE 102020211036
(43) Veröffentlichungstag der Anmeldung: 09.03.2022
(73) Patentinhaber: Aktiebolaget SKF, 415 50 Göteborg (SE)
(72) Erfinder: Haissig, Mathias, 97353 Wiesentheid (DE); Haupt, Helmut, 97509 Kolitzheim (DE); Ullmann, Johannes, 97539 Wonfurt (DE); Volkmuth, Markus, 97440 Werneck-Zeuzleben (DE)
(74) Vertreter: Kuhstrebe, Jochen

(56) Entgegenhaltungen:
- DE-A1- 10 230 357
- DE-A1-102005 061 102
- DE-A1-102008 028 164
- DE-A1-102015 105 511
- DE-C- 505 357
- US-A1- 2003 236 058

## Beschreibung

Vorliegende Erfindung betrifft eine Rolle für ein Rollenlager gemäß dem Oberbegriff von Anspruch
1. Des Weiteren betrifft die Erfindung eine Anordnung mit einem Schleifwerkzeug und einer Rolle für ein Rollenlager sowie ein Verfahren zum Herstellen einer Rolle für ein Rollenlager.

Rollen für Rollenlager haben üblicherweise an ihren jeweiligen Stirnseiten ein gerades Profil, d.h. die Stirnseiten sind weder nach innen noch nach außen gewölbt. Allerdings kann es bei bestimmten Anwendungen vorkommen, dass ein gerades Stirnseitenprofil zu einer hohen Reibung und damit zu hohen Temperaturen führt. Zudem kann sich bei gerade geschliffenen Stirnseiten, das heißt Stirnseiten, die senkrecht zu der Rollenachse verlaufen, ein ungünstiger Rolle-Bord Kontakt ergeben, was unter Axialbelastung zu erhöhter Reibung, Verschleiß bzw. Lagerschäden führen kann. Ferner sind Rollen mit einem geschliffenen Stirnseitenprofil mit einer konstanten, sphärischen Krümmung bekannt, die allerdings den Nachteil haben, dass sie sehr genau gefertigt werden müssen, um kritische Betriebszustände, wie beispielsweise Kantenläufer oder Kontaktellipsenabschneidungen zu verhindern. Eine Rolle gemäß dem Oberbegriff des Anspruchs 1 zeigt DE 102 30357 A1.

Es ist deshalb Aufgabe vorliegender Erfindung, eine Rolle mit einem verbesserten Stirnseitenprofil und einer verbesserten axialen Tragfähigkeit bereitzustellen.

Diese Aufgabe wird durch eine Rolle für ein Rollenlager gemäß Anspruch 1, einer Anordnung mit einem Schleifwerkzeug und einer Rolle für ein Rollenlager gemäß Anspruch 7 sowie einem Verfahren zum Herstellen einer Rolle für ein Rollenlager gemäß Anspruch 14 gelöst.

Im Folgenden wird eine Rolle für Rollenlager mit zwei Stirnflächen und einer Lauffläche beschrieben. Um eine geringere Reibung bei einer Axialbelastung aufzuweisen, weist mindestens eine Stirnfläche ein zumindest teilweise geschliffenes Profil mit einer nicht-konstanten Krümmung auf. Ein mit einer solchen Rolle ausgerüstetes Rollenlager kann insbesondere eine höhere axiale Tragkraft aufweisen und beispielsweise als Radsatzlager, Getriebelager, Fahrmotorenlager von Schienenfahrzeugen, Windkraftlager, Walzwerkslager eingesetzt werden.

Unter einer nicht-konstanten Krümmung wird eine Krümmung einer Kurve verstanden, deren Krümmungsradius entlang des Verlaufs der Kurve nicht konstant ist, sondern sich verändert. Beispielsweise kann die Krümmung der Kurve, die dem geschliffenen Profil der Stirnfläche entspricht und von einem Startpunkt zu einem Endpunkt verläuft, mit zunehmendem Abstand vom Startpunkt stärker oder schwächer werden.

Gemäß einem weiteren Ausführungsbeispiels ist die Krümmung entlang einer in radialer Richtung verlaufenden Kurve bestimmt. Bevorzugt ist die Krümmung eine logarithmische Krümmung und/oder das Profil ist ein torusballiges Profil. Ein Stirnflächenprofil mit einer logarithmischen Krümmung und/oder ein torusballiges Profil ermöglicht, Kantenläufer zu vermeiden und eine Reibung im Stirnseitenkontakt von Rollenlagern zu reduzieren.

Bei der Rolle kann es sich insbesondere um eine Kegelrolle handeln, die entsprechend in einem Kegelrollenlager verwendet wird. Bevorzugt läuft die Stirnfläche mit dem zumindest teilweise geschliffenen Profil an einem Führungsbord des Rollenlagers an. Im Fall einer Kegelrolle, die eine erste Stirnfläche mit einem größeren Durchmesser und eine zweite Stirnfläche mit einem kleineren Durchmesser aufweist, bildet die Stirnfläche mit dem größeren Durchmesser eine Führungsbordlauffläche, und die Stirnfläche mit dem kleineren Durchmesser bildet eine Haltebordlauffläche. Wie oben erwähnt, ist zumindest die Führungsbordlauffläche zumindest teilweise geschliffen und weist eine nicht-konstante Krümmung auf. Die Haltebordlauffläche kann ein planes, ein konstant gekrümmtes oder ein nicht-konstant gekrümmtes Profil aufweisen und beispielsweise geschliffen, hartgedreht oder durch einen anderen Herstellungsmechanismus hergestellt sein.

Dabei ermöglicht Schleifen, das Profil mit der nicht-konstanten Krümmung im Vergleich zu anderen Bearbeitungsverfahren, wie beispielsweise Hartdrehen oder Erodieren, in kürzeren Bearbeitungszeiten auszubilden und damit eine effizientere Herstellung der Stirnflächenprofilierung zu ermöglichen. Ferner ist es möglich durch Schleifen, auch kleinere Wälzkörper mit einem Profil mit einer nicht-konstanten Krümmung zu versehen. Ferner wird unter dem Ausdruck "geschliffenes Profil" ein Profil verstanden, das durch Schleifen ausgebildet ist, und dessen Form im Wesentlichen durch das Schleifen bestimmt ist. Mit anderen Worten wird unter einem geschliffenen Profil insbesondere kein Profil verstanden, das durch ein anderes Fertigungsverfahren, beispielsweise durch Hartdrehen, ausgebildet ist, und anschließend durch Behebung von Unebenheiten einem Gleitschleifprozess, wie beispielsweise Trommeln, unterzogen wird.

Bevorzugt ist das geschliffene Profil am Übergang von der Stirnfläche zu einer Lauffläche der Rolle ausgebildet. Insbesondere kann das zumindest teilweise geschliffen Profil der Stirnseite über eine, vorzugsweise ungeschliffene, Kantenkürzung in ein Profil übergehen, das auf der Lauffläche der Rolle ausgebildet ist. Dadurch kann eine Reibung am Übergang von der Stirnfläche zu einer Lauffläche der Rolle am Bord reduziert werden, wodurch die durch die Reibung erzeugte Temperatur reduziert und so der Verschleiß der Rolle verringert und die Gebrauchsdauer der Rolle und damit des Rollenlagers erhöht werden kann. Weiterhin ist vorteilhaft, wenn die Lauffläche der Rolle ebenfalls geschliffen ist. Vorzugsweise weist das Profil, das auf der Lauffläche der Rolle ausgebildet ist, ausgehend von der Kantenkürzung eine nicht konstante Krümmung auf. Höchstvorzugsweise ist die Krümmung eine logarithmische Krümmung und/oder das Profil ist ein torusballiges Profil.

Erfindungsgemäß hat das Profil bei 0,9×R eine Steigung β, die zwischen 0,15° und 2° (0,15° ≤ β ≤ 2,0°) liegt, wobei R der Rollenradius ist. Dadurch kann vorteilhafterweise eine tangentiale Anlage der Rolle an einem Bord eines Wälzlagers erzielt und insbesondere ein Kantenlaufen der Rolle verhindert werden.

Bevorzugt liegt eine Profilhöhe Y bei 0.88×R zwischen 0,00007×R und 0,0020×R (0,00007×R ≤ Y ≤ 0,0020×R). Vorzugsweise kann eine maximale Profilhöhe Z an einem radialen Abstand X zwischen 0,0002×R und 0,0065×R (0,0002×R ≤ Z ≤ 0,0065×R) liegen. Dabei wird unter dem Begriff Profilhöhe ein Abstand von dem Profil zu einem Referenzwert in Richtung der Rollenachse oder Rotationsachse verstanden. Bei der voranstehend beschriebenen Rolle liegt der Referenzwert bei 0.65×R. Bevorzugt beginnt der Kantenkürzungsbereich bei einem Wert X, der zwischen 0,8900×R und 0,9680×R (0,8900×R ≤ X ≤ 0,9680×R) liegt, und endet bei einem Wert C, der zwischen 0,9940×R und 0.9994×R (0,9940×R ≤ C ≤ 0.9994×R) liegt, wobei vorzugsweise im Anschluss an die Kantenkürzung ein Laufbahnprofil ausgebildet ist.

Gemäß einem weiteren Ausführungsbeispiel weist die Rolle radial innerhalb der geschliffenen Fläche zumindest einen ungeschliffenen Flächenbereich auf. Der ungeschliffene Flächenbereich kann beispielsweise als eine Mulde, ein sogenannter Dimpel, im Bereich der geschliffenen Fläche ausgebildet sein. Diese Mulde bzw. der Dimpel kann beispielsweise dazu dienen, die Rolle während der Montage verliersicher an bzw. in einem Käfig zu halten. Alternativ oder zusätzlich kann der nicht geschliffene Flächenbereich auch radial außerhalb der geschliffenen Fläche, z. B. am Übergang zur Laufbahn oder an einer Kante vorgesehen sein.

Gemäß einem weiteren Aspekt wird eine Anordnung mit einem Schleifwerkzeug und einer voranstehend beschriebenen Rolle für ein Rollenlager bereitgestellt, wobei das Schleifwerkzeug und die Rolle relativ zueinander rotierbar/bewegbar sind. Dabei ist das Schleifwerkzeug derart ausgebildet, dass es das geschliffene Profil ausbildet, und/oder das Schleifwerkzeug und die Rolle sind derart zueinander bewegbar, dass das geschliffene Profil ausbildbar ist. Beispielsweise können das Schleifwerkzeug und die Rolle zueinander verkippbar sein, um das geschliffene Profil auszubilden. Alternativ oder zusätzlich kann das Schleifwerkzeug ein zu dem an der Rolle auszubildenden Profil komplementäres Profil aufweisen.

Gemäß einem weiteren bevorzugten Ausführungsbeispiel sind das Schleifwerkzeug und die Rolle derart zueinander angeordnet, dass sie im Wesentlichen entlang eines linienförmigen Kontaktbereich zusammenwirken. Der Kontaktbereich entspricht dabei im Wesentlichen dem Schleifbereich und bildet grob gesprochen eine Linie, entlang derer sich die Rolle und das Schleifwerkzeug berühren. Im Allgemeinen weist der Kontaktbereich aber eine gewisse Fläche auf, wobei eine präzisere Ausgestaltung des geschliffenen Profils umso besser ist, je kleiner die Fläche des Kontaktbereichs ausfällt. Beispielsweise kann ein flächiges Profil dadurch erhalten werden kann, dass eine radial verlaufende Kurve, die die nicht-konstante Krümmung bestimmt, um die Rotationsachse gedreht wird. Durch das Drehen der radial verlaufenden Kurve um die Rotationsachse erhält man ein flächiges Profil, das in der radialen Richtung die nicht-konstante Krümmung hat.

Gemäß einem weiteren Ausführungsbeispiel rotiert das Schleifwerkzeug entlang einer Rotationsachse und/oder die Rolle rotiert entlang einer Rotationsachse, wobei insbesondere die Drehrichtungen der Rotationsachsen derart gewählt sind, dass im Kontaktbereich eine gegenläufige Bewegung ausgeführt wird. Dadurch kann beispielsweise die Effizienz Schleifens verbessert werden.

Weiterhin kann die Rotationsachse des Schleifwerkzeugs und die Rotationsachse der Rolle einen Winkel einschließen, der einen Wert zwischen 0° und 90°, insbesondere zwischen 25° und 75°, annimmt. Dabei kann der Winkel zwischen der Rotationsachse des Schleifwerkzeugs und der Rotationsachse der Rolle abhängig von dem zu schleifenden Profil einstellbar sein.

Gemäß einem weiteren Ausführungsbeispiel weist das Schleifwerkzeug im Querschnitt die Form eines Kegelstumpfes auf und weist weiterhin eine Schleiffläche auf, die auf der Mantelfläche des Kegelstumpfes ausgebildet ist, wobei insbesondere die Mantelfläche das komplementäre Profil aufweist. Auf diese Weise kann das zu schleifende Profil einfach auf der Rolle ausgebildet werden.

Bevorzugt weist die Schleiffläche am Kegelstumpf einen ersten größeren und einen zweiten kleineren Durchmesser auf und das Schleifwerkzeug ist derart an der Rolle angeordnet, dass der erste größere Durchmesser der Schleiffläche die Rolle radial weiter innen, d.h. an einem kleineren Rollendurchmesser, kontaktiert, und der zweite kleinere Durchmesser der Schleiffläche die Rolle radial weiter außen, d.h. an einem größeren Rollendurchmesser, kontaktiert. Dadurch kann bei einer gegenläufigen Rotation der Rolle und des Schleifwerkzeugs ermöglicht werden, dass sich die Rotationsgeschwindigkeiten des kleineren Rollendurchmessers und des größeren Schleifwerkzeugdurchmesser bzw. des größeren Rollendurchmessers und des kleineren Schleifwerkzeugdurchmesser angleichen, so dass ein Unterschied der Relativgeschwindigkeiten, insbesondere im Bereich des Kontaktbereiches, geringer wird.

Gemäß einer weiteren Ausführungsform hat die Schleiffläche eine Beschichtung aus einer Nickelmatrix mit eingebetteten Schleifpartikel, insbesondere kubisches Bornitrid (auch CBN genannt) und/oder Diamant, wobei eine Korngröße der Schleifpartikel im Bereich zwischen 20 und 100µm liegt. Bevorzugt kann die Korngröße 50±20µm, noch bevorzugter 46±2µm sein. Weiterhin kann das Schleifwerkzeug einen Grundkörper aufweisen, auf dem die Beschichtung ausgebildet ist. Insbesondere kann der Grundkörper aus Metall, zum Beispiel Stahl, gebildet sein. Vorzugsweise ist der Grundkörper sehr steif und hat bevorzugt ein Young'sches Modul von mehr als 100 GPa.

CBN, oder kubisches Bornitrid, ist nach Diamant das zweithärteste bekannte Material. Während Diamant aus reinem Kohlenstoff besteht, der in einer engen dreidimensionalen Matrix angeordnet ist, verfügt CBN zwar über die gleiche dreidimensionale Matrix, die jedoch aus Bor- und Stickstoffatomen besteht. Aufgrund der komplexen Atomstruktur ist bei CBN eine größere Anzahl von Kornformen als zum Beispiel bei Diamant möglich. Die möglichen Kornformen können sich von einer Oktaeder- bis hin zu einer Würfelform, oder auch von einer Oktaeder- bis hin zu einer Tetraederform erstrecken. Weiterhin hat CBN eine hohe thermische Leitfähigkeit, einen niedrigen Reibungskoeffizienten, und ein spezifisches Gewicht von 3,48 g/cm³.

Der zunehmende Einsatz von verschleißfesteren und somit schwer spanbaren Stahllegierungen und die parallel geforderten Leistungssteigerungen und Qualitätsanforderungen führten maschinen- und schleifscheibenseitig zu Weiterentwicklungen. Sobald nämlich bei dem zu bearbeitenden Material die Legierungszusätze in eine Karbidform übergehen, wie das bei pulvermetallurgischen Stählen der Fall ist, kommen konventionelle Schleifmittel wie Korunde (Al₂O₃) schnell an ihre Leistungsgrenze (Knoop'sche Härte von 2.200) und der Einsatz von CBN mit einer Knoop'schen Härte von 4.500 ist mehr als gerechtfertigt. Zudem hat CBN gegenüber Al₂O₃ Vorteile in Bezug auf die Wärmeleitfähigkeit und weist somit einen kühleren Schliff auf.

Abhängig von dem zu schleifenden Material hat CBN zudem den Vorteil, dass es im Gegensatz zu Diamant keinen Kohlenstoff aufweist, der in das zu schleifende Material, insbesondere die Stahllegierungen, diffundiert und diese dadurch in ihren Materialeigenschaften verändern kann. CBN hat eine hohe Lebensdauer und ausgezeichnete Materialabtragungsraten und wird vor allem in Gebieten eingesetzt, die üblicherweise kurze Schleifzykluszeiten und vollautomatisierte Fertigungen aufweisen. Insbesondere pulvermetallurgische oder hochlegierte Werkzeugstähle sind darüber hinaus mit konventionellen Schleifmitteln oftmals nicht mehr wirtschaftlich schleifbar.

Gemäß einer weiteren Ausführungsform sind die eingebetteten Schleifpartikel crushiert. Unter "Crushieren" (engl. "Brechen") versteht man in der Schleiftechnik das Brechen der Kornspitzen, um die Formgenauigkeit und die Schleiffreudigkeit zu erhöhen. Dies geschieht mittels einer Hartmetallrolle, die rotierend und bahngesteuert die ebenfalls mit gleicher Umfangsgeschwindigkeit rotierende Schleiffläche abfährt und überstehende, von der Profilinie abweichende, Kornspitzen auf genaues Maß bricht. Bei diesem Prozess sollte eine Relativgeschwindigkeit zwischen den beiden Umfangsgeschwindigkeiten der Hartmetallrolle und der Schleiffläche so klein wie möglich sein. Crushierte Schleifpartikel ermöglichen insbesondere das Schleifen von hochgenauen Profilen und Oberflächenqualitäten. Alternativ können die eingebetteten Schleifpartikel auch nicht-crushiert sein.

Gemäß einem weiteren Aspekt der Erfindung wird ein Verfahren zum Herstellen einer Rolle für ein Rollenlager, wie voranstehend beschrieben, bereitgestellt, wobei insbesondere eine voranstehend beschriebene Anordnung verwendet wird.

Insbesondere kann das Verfahren die folgenden Schritte aufweisen:
Bereitstellen einer Rolle für ein Rollenlager mit zwei Stirnflächen und einer Lauffläche, wobei die Rolle ein definiertes Aufmaß auf ihre Abmessungen hat, und
Schleifen von zumindest einer Stirnfläche der Rolle mit einem Schleifwerkzeug, so dass die mindestens eine Stirnfläche ein zumindest teilweise geschliffenes Profil mit einer nicht-konstanten Krümmung aufweist.

Insbesondere kann die Rolle das Aufmaß auf ihre Rollenlänge haben. Unter einer Rollenlänge versteht man die Länge der Rolle zwischen den beiden Stirnflächen entlang der Rotationsachse. Das Aufmaß beträgt beispielsweise die ein- bis vierfache Höhe des gewünschten Profils. Die Höhe des Profils entspricht dabei der axialen Erstreckung entlang des geschliffenen Profils in Axialrichtung der Rolle. Dabei kann das Aufmaß im Bereich der Rotationsachse der Rolle geringer ausfallen als am Übergang zur Lauffläche. Zum Beispiel kann das Aufmaß in der Mitte 30µm und am Übergang zur Lauffläche 50 µm betragen.

Dabei kann die bereitgestellte Rolle bereits eine Grundform der gewünschten Rollen aufweisen. Beispielsweise kann die Rolle eine Kegelform, eine Zylinderform, oder dergleichen aufweisen. Die Grundform kann durch Gießen und/oder mechanisches Bearbeiten aus Rohlingen gebildet sein.

Bevorzugt ist die bereitgestellte Rolle bereits inklusive der zwei Stirnseiten und/oder der Lauffläche gehärtet. Weiterhin kann die bereitgestellte Rolle vor dem Schleifen des Stirnseitenprofils vorgeschliffen und/oder hartgedreht werden. Dies kann vorteilhaft sein, um eine plane Oberfläche bereitzustellen. Beispielsweise kann beim anschließenden Schleifen des Stirnflächenprofils das bereitgestellte Aufmaß teilweise und/oder vollständig weggeschliffen werden, um das Stirnseitenprofil zu erhalten.

Bevorzugt werden die Stirnflächen vor den Laufflächen geschliffen. Beispielsweise kann eine vorgeschliffene Rolle zunächst mit den gewünschten Stirnflächenprofilen versehen werden und im Anschluss an den profilgebenden Schleifprozess kann ein Endbearbeitungsverfahren zur Oberflächenveredelung, beispielsweise ein Polieren, ein Honen, ein Läppen, und/oder ein Gleitschleifen, sowie ein Schleifen der Lauffläche stattfinden.

Gemäß einer weiteren Ausführungsform umfasst das Verfahren ein Drehen einer Mulde bzw. des Dimpels im Bereich einer Rotationsachse der Rolle, wobei die Mulde einen definierten Durchmesser aufweist. Bevorzugt kann die Mulde vor dem Schleifen der Stirnflächen geformt werden. Beispielweise kann der definierte Durchmesser der Mulde abhängig von einem Rollendurchmesser sein. Bevorzugt ist der Durchmesser der Mulde kleiner als das 0,65-fache des Rollendurchmessers. Dies ermöglicht eine flexible Halterung der Rolle an dem Käfig während der Montage.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
Fig. 1: zeigt eine Rolle für ein Rollenlager gemäß einer Ausführungsform,
Fig. 2: zeigt einen Ausschnitt A der Rolle aus Fig. 1,
Fig. 3: zeigt eine Anordnung mit einem Schleifwerkzeug und einer Rolle für ein Rollenlager gemäß einer weiteren Ausführungsform,
Fig. 4: zeigt einen Ausschnitt X der Anordnung aus Fig. 3, und
Fig. 5: zeigt einen schematischen Graph, der eine Darstellung des geschliffenen Profils der Rolle aus Fig. 1 zeigt.

Im Folgenden werden gleiche oder funktionell gleichwirkende Elemente mit denselben Bezugszeichen gekennzeichnet.

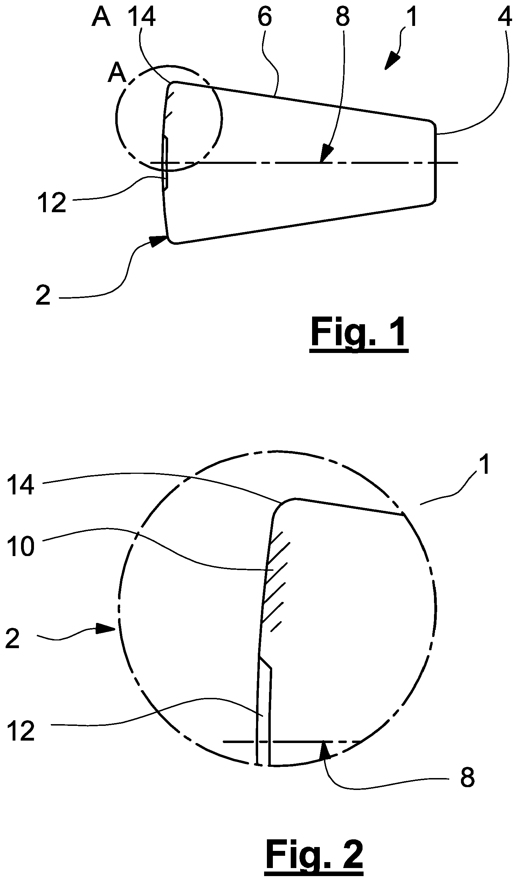

Fig. 1 zeigt eine Rolle 1 für ein Rollenlager, die im dargestellten Ausführungsbeispiel als Kegelrolle ausgebildet ist, die in einem Kegelrollenlager verwendet wird. Fig. 2 zeigt einen Ausschnitt A eines Profils der Rolle 1 an einer ihrer Stirnflächen 2. Die Rolle kann alternativ auch eine andere Form, beispielsweise eine Zylinderform, haben. Die Rolle 1 ist mit zwei Stirnflächen 2, 4 und einer Lauffläche 6 versehen, wobei die Rolle 1 dazu ausgelegt ist, um eine Rotationsache 8 zu rotieren. Dabei hat im Fall der gezeigten Kegelrolle die Stirnfläche 4 einen kleineren Durchmesser und die Stirnfläche 2 einen größeren Durchmesser, wobei insbesondere die Stirnfläche 4 an einem Führungsbord (nicht gezeigt) des Lagers anläuft und die Stirnfläche 2 ein Haltebord (nicht gezeigt) kontaktieren kann.

Um eine geringere Reibung bei einer Axialbelastung aufzuweisen und dadurch ein Kantenlaufen zu verhindern, weist die Stirnfläche 2 ein zumindest teilweise geschliffenes Profil 10 auf. Das geschliffene Profil 10 ist in Fig. 2 durch eine schraffierte Fläche dargestellt.

Das Profil 10 hat eine nicht-konstanten Krümmung, wobei die Krümmung entlang einer in radialer Richtung verlaufenden Kurve bestimmt ist und beispielsweise eine logarithmische Krümmung ist. Alternativ oder zusätzlich kann das geschliffene Profil 10 eine torusballiges Form haben. Das geschliffene Profil kann beispielsweise bis zu einem Übergangsbereich 14 von der Stirnfläche 2 zu der Lauffläche 6 der Rolle 1 ausgebildet sein. Insbesondere kann der Übergangsbereich 14 als eine vorzugsweise ungeschliffene Kantenkürzung ausgebildet sein, die in ein auf der Lauffläche 6 der Rolle 1 ausgebildetes Profil übergeht. Ferner kann das Profil, das auf der Lauffläche 6 der Rolle 1 ausgebildet ist, ausgehend von der Kantenkürzung ebenfalls eine nicht konstante Krümmung aufweisen. Beispielsweise kann das Profil der Lauffläche 6 der Rolle 1 eine logarithmische Krümmung aufweisen und/oder als ein torusballiges Profil ausgebildet sein.

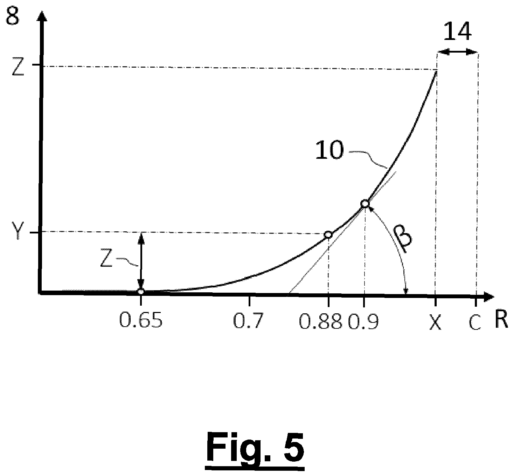

Fig. 5 ist ein schematischer Graph, der eine Darstellung des geschliffenen Profils zeigt, wobei auf der X-Achse der Rollenradius R und auf der Y-Achse die Rotationsachse aufgetragen ist. Das geschliffene Profil 10 mit der nicht-konstanten Krümmung hat bei einem Abstand von 0,9×R eine Steigung β, die zwischen 0,15° und 2° (0,15° ≤ β ≤ 2,0°) liegt, wobei R der Rollenradius bzw. der halbe Rollendurchmesser ist. Dadurch kann vorteilhafterweise eine tangentiale Anlage der Rolle 1 an einem Bord eines Wälzlagers erzielt und insbesondere ein Kantenlaufen der Rolle 1 verhindert werden.

Ferner liegt bei dem Profil 10 eine Profilhöhe Y bei 0.88×R zwischen 0,00007×R und 0,0020×R(0,00007×R ≤ Y ≤ 0,0020×R). Die Profilhöhe ist ein Abstand von dem Profil zu einem Referenzwert in Richtung der Rotationsachse 8 der Rolle 1, wobei bei der voranstehend beschriebenen Rolle der Referenzwert bei 0.65×R liegt. Die maximale Profilhöhe Z bei einem radialen Abstand X liegt zwischen 0,0002×R und 0,0065×R (0,0002×R ≤ Z ≤ 0,0065×R).

Des Weiteren beginnt der Übergangsbereich 14 oder Kantenkürzungsbereich der Rolle 1 bei einem Wert X, der zwischen 0,8900×R und 0,9680×R (0,8900×R ≤ X ≤ 0,9680×R) liegt, und endet bei einem Wert C, der zwischen 0,9940×R und 0.9994×R (0,9940×R ≤ C ≤ 0.9994×R) liegt.

Weiterhin zeigen Fig. 1 und 2, dass im Bereich der Rotationsachse 8 in der Seitenfläche 2 eine Mulde 12 vorgesehen ist, die in dem dargestellten Ausführungsbeispiel als nicht geschliffener Flächenbereich ausgebildet ist und somit radial innerhalb der geschliffenen Fläche zumindest einen ungeschliffenen Flächenbereich ausbildet. Diese Mulde 12 kann beispielsweise dazu dienen, die Rolle 1 während der Montage verliersicher an bzw. in einem Käfig (nicht gezeigt) zu halten. Alternativ oder zusätzlich kann die Mulde 12 auch geschliffen ausgebildet sein und/oder ein nicht-geschliffener Flächenbereich radial außerhalb der geschliffenen Fläche, d.h. außerhalb der geschliffenen Profils 10, beispielsweise im Übergangbereich 14 zu der Lauffläche 6, vorgesehen sein.

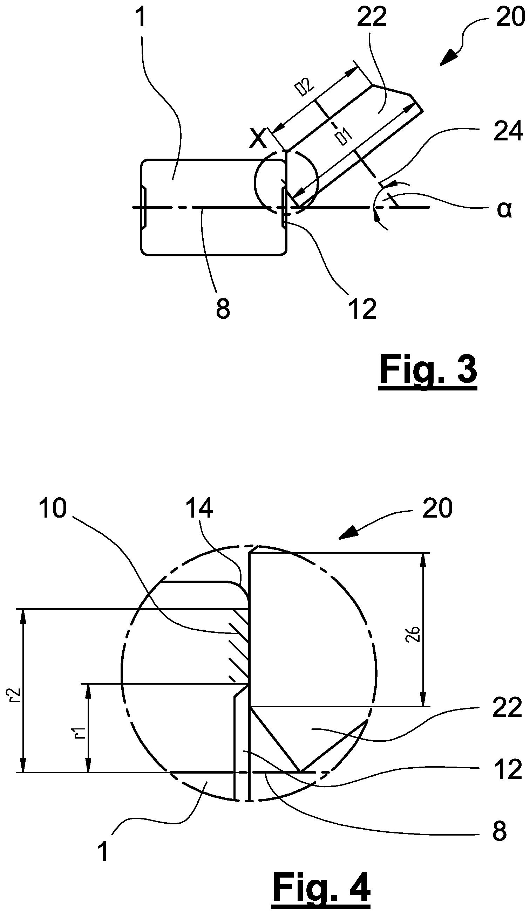

Fig. 3 zeigt eine Anordnung 20 mit einem Schleifwerkzeug 22 und einer Rolle 1 für ein Rollenlager, wobei die in der Fig. 3 gezeigte Rolle 1 als Zylinderrolle ausgebildet ist. Fig. 4 zeigt einen Ausschnitt X der Anordnung.

Das Schleifwerkzeug 22 hat eine Rotationsachse 24 und die Rolle 1 hat eine Rotationsachse 8, wobei das Schleifwerkzeug 22 und die Rolle 1 relativ zueinander um ihre jeweiligen Rotationsachsen 8, 24 rotierbar sind. Ferner können das Schleifwerkzeug 22 und die Rolle 1 auch relativ zueinander bewegbar sein. Bevorzugt sind die Drehrichtungen der Rotationsachsen 8, 24 derart gewählt sind, dass im Kontaktbereich von Schleifwerkzeug 22 und Rolle 1 eine gegenläufige Bewegung ausgeführt wird.

Die Rotationsachse 24 des Schleifwerkzeugs 22 und die Rotationsachse 8 der Rolle 1 schließen einen Winkel α ein, der einen Wert zwischen 0° und 90°, insbesondere zwischen 25° und 75°, annehmen kann. Zudem kann der Winkel α zwischen der Rotationsachse 24 des Schleifwerkzeugs 22 und der Rotationsachse 8 der Rolle 1 abhängig von dem zu schleifenden Profil einstellbar sein.

In dem dargestellten Ausführungsbeispiel hat das Schleifwerkzeug 22 im Querschnitt die Form eines Kegelstumpfes und weist eine Schleiffläche 26 auf, die auf einer Mantelfläche des Kegelstumpfes ausgebildet ist. Die Schleiffläche 26 hat eine Beschichtung aus einer Nickelmatrix mit eingebetteten Schleifpartikel aus kubischen Bornitrid (auch CBN genannt), wobei eine Korngröße der Schleifpartikel im Bereich zwischen 20 und 100µm liegt, und bevorzugt 50±20µm und am bevorzugsten 46±2µm sein kann. Alternativ oder zusätzlich können auch Schleifpartikel aus Diamant in der Schleiffläche 26 eingebettet sein. Weiterhin kann das Schleifwerkzeug 22 einen Grundkörper (nicht dargestellt) aufweisen, auf dem die Beschichtung ausgebildet ist. Insbesondere kann der Grundkörper aus Metall, zum Beispiel Stahl, gebildet sein. Vorzugsweise ist der Grundkörper sehr steif und hat bevorzugt ein Young'sches Modul von mehr als 100 GPa.

Um das geschliffene Profil 10 auszubilden, ist die Schleiffläche 26 mit einem zu dem auszubildenden Profil komplementären Profil versehen. Dabei weist die Schleiffläche 26 am Kegelstumpf einen ersten größeren Durchmesser D1 und einen zweiten kleineren Durchmesser D2 auf. Ferner ist das Schleifwerkzeug 22 derart an der Rolle 1 angeordnet, dass der erste Durchmesser D1 die Rolle 1 radial weiter innen bei einem Rollenradius r1 kontaktiert und der zweite Durchmesser D2 die Rolle radial weiter außen bei einem Rollenradius r2 kontaktiert (siehe Fig. 4).

Dadurch dass der erste größere Durchmesser D1 die Rolle radial weiter innen, d.h. am Rollenradius r1, kontaktiert und der zweite kleinere Durchmesser D2 die Rolle radial weiter außen, d.h. am größeren Rollenradius r2 kontaktiert, kann bei einer gegenläufigen Rotation der Rolle 1 und des Schleifwerkzeugs 22 zueinander ermöglicht werden, dass sich die relativen Rotationsgeschwindigkeiten des kleineren Rollenradius r1 und des größeren Schleifwerkzeugdurchmessers D1 bzw. des größeren Rollenradius r2 und des kleineren Schleifwerkzeugdurchmesser D2 angleichen, so dass ein Unterschied, insbesondere entlang des Kontaktbereiches, geringer wird und die relative Rotationsgeschwindigkeit minimiert werden kann. Dies erlaubt, dass die Wärmeentwicklung, die beim Schleifen entsteht, zu minimieren. Der Bereich, in dem sich das Schleifwerkzeug 22 und die Rolle 1 berühren, entspricht dabei im Wesentlichen dem Schleifbereich. Dabei ist die Ausgestaltung des geschliffenen Profils 10 umso genauer, je kleiner die Fläche des Kontaktbereichs ausfällt.

Zusammenfassend wird eine Rolle für ein Rollenlager mit einem geschliffenen Stirnseitenprofil bereitgestellt, das eine geringere Reibung bei einer Axialbelastung und dadurch eine höhere axiale Tragkraft aufweist. Dabei ermöglicht das Schleifen kürzere Bearbeitungszeiten und damit eine effizientere Herstellung der Stirnflächenprofilierung insbesondere im Vergleich zu anderen Bearbeitungsverfahren, wie beispielsweise Hartdrehen. Ferner ist es auch möglich, kleine Wälzkörper mit einem beliebig gekrümmten Profil zu versehen, wodurch eine Verbesserung der Gleitreibung und somit eine Erhöhung der axialen Tragfähigkeit der Wälzkörper gewährleistet wird.

### Bezugszeichenliste

- 1: Rolle
- 2, 4: Stirnfläche
- 6: Lauffläche
- 8: Rotationsachse
- 10: geschliffenes Profil
- 12: Mulde
- 14: Übergangsbereich
- 20: Anordnung
- 22: Schleifwerkzeug
- 24: Rotationsachse
- 26: Schleiffläche
- D1, D2: Durchmesser
- r1, r2: Rollenradius
- Z: maximale Profilhöhe
- Y: Profilhöhe
- X: Übergangsbereichsanfang
- C: Übergangsbereichsende

## Patentansprüche

1. Rolle (1) für ein Rollenlager mit zwei Stirnflächen (2, 4) und einer Lauffläche (6), **dadurch gekennzeichnet, dass** mindestens eine Stirnfläche (2, 4) ein zumindest teilweise geschliffenes Profil (10) mit einer nicht-konstanten Krümmung aufweist, **dadurch gekennzeichnet, dass** das Profil (10) bei 0,9×R eine Steigung β gegenüber einer Geraden entlang des Rollenradius R hat, die zwischen 0,15° und 2° (0,15° ≤ (3 ≤ 2,0°) liegt.

2. Rolle (1) für Rollenlager gemäß Anspruch 1, wobei das geschliffene Profil (10) am Übergang (14) von Stirnfläche (2, 4) zu Lauffläche (6) ausgebildet ist, wobei vorzugsweise das zumindest teilweise geschliffen Profil (10) der Stirnfläche (2, 4) über eine, vorzugsweise ungeschliffene, Kantenkürzung in ein Profil übergeht, das auf der Lauffläche (6) der Rolle (1) ausgebildet ist.

3. Rolle (1) für Rollenlager gemäß einem der vorhergehenden Ansprüche, wobei die Krümmung entlang einer in radialer Richtung verlaufenden Kurve bestimmt ist.

4. Rolle (1) für Rollenlager gemäß einem der vorhergehenden Ansprüche, wobei die Krümmung eine logarithmische Krümmung und/oder das Profil ein torusballiges Profil ist.

5. Rolle (1) für Rollenlager gemäß einem der vorhergehenden Ansprüche, wobei eine Profilhöhe Y bei 0.88×R zwischen 0,00007×R und 0,0020×R(0,00007×R ≤ Y ≤ 0,0020×R) liegt.

6. Rolle (1) für Rollenlager gemäß einem der vorhergehenden Ansprüche, wobei die Rolle (1) radial innerhalb der geschliffenen Fläche zumindest einen ungeschliffenen Flächenbereich (12) aufweist.

7. Anordnung (20) mit einem Schleifwerkzeug (22) und einer Rolle (1) für ein Rollenlager gemäß einem der Ansprüche 1 bis 6, wobei das Schleifwerkzeug (22) und die Rolle (1) relativ zueinander rotierbar/bewegbar sind, wobei das Schleifwerkzeug (22) derart ausgebildet ist, dass es das geschliffene Profil (10) ausbildet, und/oder das Schleifwerkzeug (22) und die Rolle (1) derart zueinander bewegbar sind, dass das geschliffene Profil (10) ausbildbar ist.

8. Anordnung (20) nach Anspruch 7, wobei das Schleifwerkzeug (22) ein zu dem an der Rolle (1) auszubildenden Profil (10) komplementäres Profil aufweist.

9. Anordnung (20) nach Anspruch 7 oder 8, wobei das Schleifwerkzeug (22) und die Rolle (1) derart zueinander angeordnet sind, dass sie im Wesentlichen entlang eines linienförmigen Kontaktbereich zusammenwirken.

10. Anordnung (20) nach einem der Ansprüche 7 bis 9, wobei das Schleifwerkzeug (22) entlang einer Rotationsachse (24) rotiert und/oder die Rolle (1) entlang einer Rotationsachse (8) rotiert, wobei insbesondere die Drehrichtungen der Rotationsachsen (8, 24) derart gewählt sind, dass im Kontaktbereich eine gegenläufige Bewegung ausgeführt wird, wobei vorzugsweise die Rotationsachse (24) des Schleifwerkzeugs (22) und die Rotationsachse (8) der Rolle (1) einen Winkel (α) einschließen, der einen Wert zwischen 0° und 90°, insbesondere zwischen 25° und 75°, annimmt.

11. Anordnung (20) gemäß einem der Ansprüche 7 bis 10, wobei das Schleifwerkzeug (22) im Querschnitt die Form eines Kegelstumpfes aufweist und weiterhin eine Schleiffläche (26) aufweist, die auf der Mantelfläche des Kegelstumpfes ausgebildet ist, wobei insbesondere die Mantelfläche das komplementäre Profil aufweist.

12. Anordnung (20) gemäß Anspruch 11, wobei die Schleiffläche (26) am Kegelstumpf einen ersten größeren und einen zweiten kleineren Durchmesser (D1, D2) aufweist und das Schleifwerkzeug derart an der Rolle angeordnet ist, dass der erste Durchmesser (D1) die Rolle radial weiter innen kontaktiert und der zweite Durchmesser (D2) die Rolle radial weiter außen kontaktiert.

13. Anordnung (20) nach einem der Ansprüche 7 bis 12, wobei die Schleiffläche (26) eine Beschichtung aus einer Nickelmatrix mit eingebetteten Schleifpartikel, insbesondere kubisches Bornitrid (auch CBN genannt) und/oder Diamant, hat, wobei eine Korngröße der Schleifpartikel im Bereich zwischen 20 und 100µm liegt.

14. Verfahren zum Herstellen einer Rolle (1) für ein Rollenlager nach einem der Ansprüche 1 bis 6, wobei insbesondere eine Anordnung (20) nach einem der Ansprüche 7 bis 13 verwendet wird.

## Claims

1. Roller (1) for a roller bearing, having two end surfaces (2, 4) and a running surface (6), **characterized in that** at least one end surface (2, 4) has an at least partially ground profile (10) with a non-constant curvature, **characterized in that** the profile (10), at 0.9 × R, has a pitch β in relation to a straight line along the roller radius R, the pitch being between 0.15° and 2° (0.15° ≤ β ≤ 2.0°).

2. Roller (1) for roller bearing according to Claim 1, wherein the ground profile (10) is formed at the transition (14) from the end surface (2, 4) to the running surface (6), wherein preferably the at least partially ground profile (10) of the end surface (2, 4) merges via a, preferably unground, edge reduction into a profile which is formed on the running surface (6) of the roller (1).

3. Roller (1) for roller bearing according to either of the preceding claims, wherein the curvature is determined along a curve running in the radial direction.

4. Roller (1) for roller bearing according to one of the preceding claims, wherein the curvature is a logarithmic curvature and/or the profile is a toroidal profile.

5. Roller (1) for roller bearing according to one of the preceding claims, wherein a profile height Y at 0.88 × R is between 0.00007 × R and 0.0020 × R (0.00007 × R ≤ Y ≤ 0.0020 × R).

6. Roller (1) for roller bearing according to one of the preceding claims, wherein the roller (1) has at least one unground surface region (12) radially within the ground surface.

7. Arrangement (20) with a grinding tool (22) and a roller (1) for a roller bearing according to one of Claims 1 to 6, wherein the grinding tool (22) and the roller (1) are rotatable /movable relative to each other, wherein the grinding tool (22) is designed in such a manner that it forms the ground profile (10), and/or the grinding tool (22) and the roller (1) are movable with respect to each other in such a manner that the ground profile (10) can be formed.

8. Arrangement (20) according to Claim 7, wherein the grinding tool (22) has a complementary profile to the profile (10) to be formed on the roller (1).

9. Arrangement (20) according to Claim 7 or 8, wherein the grinding tool (22) and the roller (1) are arranged with respect to each other in such a manner that they interact substantially along a linear contact region.

10. Arrangement (20) according to one of Claims 7 to 9, wherein the grinding tool (22) rotates along an axis of rotation (24) and/or the roller (1) rotates along an axis of rotation (8), wherein in particular the directions of rotation of the axes of rotation (8, 24) are selected in such a manner that an opposed movement is carried out in the contact region, wherein preferably the axis of rotation (24) of the grinding tool (22) and the axis of rotation (8) of the roller (1) enclose an angle (α) which assumes a value between 0° and 90°, in particular between 25° and 75°.

11. Arrangement (20) according to one of Claims 7 to 10, wherein the grinding tool (22) in the cross section is in the shape of a truncated cone and furthermore has a grinding surface (26) which is formed on the lateral surface of the truncated cone, wherein in particular the lateral surface has the complementary profile.

12. Arrangement (20) according to Claim 11, wherein the grinding surface (26) on the truncated cone has a first larger diameter and a second smaller diameter (D1, D2) and the grinding tool is arranged on the roller in such a manner that the first diameter (D1) contacts the roller radially further inward and the second diameter (D2) contacts the roller radially further outward.

13. Arrangement (20) according to one of Claims 7 to 12, wherein the grinding surface (26) has a coating consisting of a nickel matrix with embedded grinding particles, in particular cubic boron nitride (also called CBN) and/or diamond, wherein a grain size of the grinding particles lies within the range of between 20 and 100 µm.

14. Method for manufacturing a roller (1) for a roller bearing according to one of Claims 1 to 6, wherein in particular an arrangement (20) according to one of Claims 7 to 13 is used.

## Revendications

1. Rouleau (1) pour un roulement à rouleaux avec deux surfaces frontales (2, 4) et une surface de roulement (6), **caractérisé en ce**
**qu'**au moins une surface frontale (2, 4) présente un profil (10) au moins partiellement rectifié avec une courbure non-constante,
**caractérisé en ce que** le profil (10) à 0,9xR a une pente β par rapport à une droite le long du rayon de rouleau R qui est comprise entre 0,15° et 2° (0,15° ≤ β ≤ 2,0°).

2. Rouleau (1) pour roulements à rouleaux selon la revendication 1, dans lequel le profil rectifié (10) est réalisé à la transition (14) entre la surface frontale (2, 4) et la surface de roulement (6), dans lequel de préférence le profil (10) au moins partiellement rectifié de la surface frontale (2, 4) se transforme en un profil réalisé sur la surface de roulement (6) du rouleau (1) par l'intermédiaire d'un raccourcissement de bord, de préférence non rectifié.

3. Rouleau (1) pour roulements à rouleaux selon l'une quelconque des revendications précédentes, dans lequel la courbure est déterminée le long d'une courbe s'étendant dans la direction radiale.

4. Rouleau (1) pour roulements à rouleaux selon l'une quelconque des revendications précédentes, dans lequel la courbure est une courbure logarithmique et/ou le profil est un profil torique.

5. Rouleau (1) pour roulements à rouleaux selon l'une quelconque des revendications précédentes, dans lequel une hauteur de profil Y à 0,88xR est comprise entre 0,00007xR et 0,0020xR (0,00007xR ≤ Y ≤ 0,0020*R).

6. Rouleau (1) pour roulements à rouleaux selon l'une quelconque des revendications précédentes, dans lequel le rouleau (1) présente radialement à l'intérieur de la surface rectifiée au moins une zone de surface non rectifiée (12).

7. Agencement (20) avec un outil de rectification (22) et un rouleau (1) pour un roulement à rouleaux selon l'une quelconque des revendications 1 à 6, dans lequel l'outil de rectification (22) et le rouleau (1) peuvent tourner/se déplacer l'un par rapport à l'autre, dans lequel l'outil de rectification (22) est configuré de telle sorte qu'il forme le profil rectifié (10), et/ou l'outil de rectification (22) et le rouleau (1) peuvent se déplacer l'un par rapport à l'autre de telle sorte que le profil rectifié (10) peut être formé.

8. Agencement (20) selon la revendication 7, dans lequel l'outil de rectification (22) présente un profil complémentaire au profil (10) à former sur le rouleau (1) .

9. Agencement (20) selon la revendication 7 ou 8, dans lequel l'outil de rectification (22) et le rouleau (1) sont agencés l'un par rapport à l'autre de telle sorte qu'ils coopèrent essentiellement le long d'une zone de contact linéaire.

10. Agencement (20) selon l'une quelconque des revendications 7 à 9, dans lequel l'outil de rectification (22) tourne le long d'un axe de rotation (24) et/ou le rouleau (1) tourne le long d'un axe de rotation (8), dans lequel notamment les directions de rotation des axes de rotation (8, 24) sont choisies de telle sorte qu'un mouvement contrarotatif est effectué dans la zone de contact, dans lequel de préférence l'axe de rotation (24) de l'outil de rectification (22) et l'axe de rotation (8) du rouleau (1) forment un angle (α) qui prend une valeur comprise entre 0° et 90°, notamment entre 25° et 75°.

11. Agencement (20) selon l'une quelconque des revendications 7 à 10, dans lequel l'outil de rectification (22) présente en section transversale la forme d'un tronc de cône et présente en outre une surface de rectification (26) qui est formée sur la surface d'enveloppe du tronc de cône, dans lequel notamment la surface d'enveloppe présente le profil complémentaire.

12. Agencement (20) selon la revendication 11, dans lequel la surface de rectification (26) sur le tronc de cône présente un premier diamètre plus grand et un deuxième diamètre plus petit (D1, D2) et l'outil de rectification est agencé sur le rouleau de telle sorte que le premier diamètre (D1) est en contact avec le rouleau radialement plus à l'intérieur et le deuxième diamètre (D2) est en contact avec le rouleau radialement plus à l'extérieur.

13. Agencement (20) selon l'une quelconque des revendications 7 à 12, dans lequel la surface de rectification (26) a un revêtement en une matrice de nickel avec des particules de rectification incorporées, notamment du nitrure de bore cubique (également appelé CBN) et/ou du diamant, dans lequel une taille de grain des particules de rectification se situe dans la plage comprise entre 20 et 100 pm.

14. Procédé de fabrication d'un rouleau (1) pour un roulement à rouleaux selon l'une quelconque des revendications 1 à 6, dans lequel notamment un agencement (20) selon l'une quelconque des revendications 7 à 13 est utilisé.
